# EUROPEAN PATENT APPLICATION

(11) **EP 3 564 905 A1**
(43) Date of publication of application: **06.11.2019**
(21) Application number: 18170930.4
(22) Date of filing: 04.05.2018
(51) Int. Cl.: G06T 9/00, G06T 15/20

(54) **CONVERSION OF A VOLUMETRIC OBJECT IN A 3D SCENE INTO A SIMPLER REPRESENTATION MODEL**

(71) Applicant: Nokia Technologies Oy, 02610 Espoo (FI)
(72) Inventor: Macq, Jean-François, Antwerpen 2018 (BE); Tytgat, Donny, Oosterzele 9860 (BE)
(74) Representative: Sayer, Robert David

(57) **Abstract**

An apparatus and method is disclosed, the method comprising receiving video data representing a three-dimensional scene, receiving from a user device data representing a field of view within the scene and identifying, based on the field of view, a plurality of parts of the scene. The method may also comprise transforming the parts to a selected one of a plurality of representational models, the representational models having different respective properties, the selection being based on one or more predetermined rules. The transformed parts may be placed into a combined video set or stream for transmission to the user device.

## Description

### Field

Embodiments herein relate to video processing, for example video processing for three-dimensional video content

### Background

Three-dimensional video content may comprise data which, when rendered, may show all or part of a space which appears three-dimensional to the user and within which the user may feel immersed. An example use of three-dimensional video content is in Virtual Reality (VR), which is a rapidly developing area of technology in which video content is provided to a user device, such as a headset. As is known, the user device may be provided with a live or stored feed from a source of video content, the video content being data representing a virtual reality space for immersive output through the user device. The video content may comprise data representing the virtual reality space in three-dimensions.

Position and/or movement of the user device can enhance the immersive experience. Currently, most headsets use so-called three degrees of freedom (3DoF) which means that the head movement in the yaw, pitch and roll axes are measured and determine what the user sees and/or hears. This facilitates the scene remaining largely static in a single location as the user rotates their head. A next stage may be referred to as 3DoF+ which may facilitate limited translational movement in Euclidean space in the range of, e.g. tens of centimetres, around a location. A yet further stage is a six degrees-of-freedom (6DoF) virtual reality system, where the user is able to freely move in the Euclidean space and rotate their head in the yaw, pitch and roll axes. Six degrees-of-freedom virtual reality systems and methods will enable the provision and consumption of volumetric virtual reality content.

### Summary

An example embodiment provides an apparatus, comprising means for performing: receiving video data representing a three-dimensional scene; receiving from a user device data representing a field of view within the scene; identifying, based on the field of view, a plurality of parts of the scene; transforming the parts to a selected one of a plurality of representational models, the representational models having different respective properties, the selection being based on one or more predetermined rules; and encoding the transformed parts into a combined video set or stream for transmission to the user device.

The means may be further configured to perform predicting one or more future fields of view within the scene and wherein the identifying means is arranged to identify a plurality of parts within the field of view and within the one or more future fields of view.

The means may be further configured to receive data indicative of historical motion of the user device and to determine therefrom the predicted one or more future fields of view.

The predetermined rules may be dependent on parameters associated with the user device and/or a user of the user device.

The predetermined rules may be dependent on parameters of the human visual system of a user of the user device.

The predetermined rules may be dependent on depth perception of a user of the user device.

The means may be further configured to determine that the transformation of the parts is based on the respective part's depth from a position or future position of the user device in accordance with the predetermined rules.

The predetermined rules may be dependent on performance parameters associated with the user device or a communications network associated with the user device.

The means may be further configured to determine that the transformation of the parts is selected based on a bandwidth needed to transmit the combined video set or stream to the client device in accordance with the predetermined rules.

The means may be further configured to receive from the user device an indication of a currently-available bandwidth for receiving the combined video set or stream, and wherein the means may be further configured to determine that the selected transformation of the parts is such that the plurality of parts when encoded to the combined video set or stream are substantially within the currently-available bandwidth in accordance with the predetermined rules.

The means may be further configured to determine that the transformation of the parts is selected based on the computational resources needed to decode the combined video set or stream at the user device in accordance with the predetermined rules.

The means may be further configured to receive from the user device an indication of currently-available computational resources of the user device, and wherein the means may be further configured to determine that the selected transformation of the parts is such that the plurality of parts when encoded to the combined video set or stream are decodable using said currently-available computational resources in accordance with the predetermined rules.

The representational models may comprise two or more of:
- a panoramic representation;
- a two-dimensional cutout representation;
- a two-dimensional cutout plus depth representation; and
- a three-dimensional volumetric representation.

Another example embodiment provides a method comprising: receiving video data representing a three-dimensional scene; receiving from a user device data representing a field of view within the scene; identifying, based on the field of view, a plurality of parts of the scene; transforming the parts to a selected one of a plurality of representational models, the representational models having different respective properties, the selection being based on one or more predetermined rules; and encoding the transformed parts into a combined video set or stream for transmission to the user device.

The method may further comprise predicting one or more future fields of view within the scene and wherein identifying may comprise identifying a plurality of parts within the field of view and within the one or more future fields of view.

The method may further comprise receiving data indicative of historical motion of the user device and determining therefrom the predicted one or more future fields of view.

The predetermined rules may be dependent on parameters associated with the user device and/or a user of the user device.

The predetermined rules may be dependent on parameters of the human visual system of a user of the user device.

The predetermined rules may be dependent on depth perception of a user of the user device.

The predetermined rules may determine that the transformation of the parts is based on the respective part's depth from a position or future position of the user device.

The predetermined rules may be dependent on performance parameters associated with the user device or a communications network associated with the user device.

The method may further comprise determining that the transformation of the parts is selected based on a bandwidth needed to transmit the combined video set or stream to the client device in accordance with the predetermined rules.

The method may further comprise receiving from the user device an indication of a currently-available bandwidth for receiving the combined video set or stream, and determining that the selected transformation of the parts is such that the plurality of parts when encoded to the combined video set or stream are substantially within the currently-available bandwidth in accordance with the predetermined rules.

The method may further comprise determining that the transformation of the parts is selected based on the computational resources needed to decode the combined video set or stream at the user device in accordance with the predetermined rules.

The method may comprise receiving from the user device an indication of currently-available computational resources of the user device, and determining that the selected transformation of the parts is such that the plurality of parts when encoded to the combined video set or stream are decodable using said currently-available computational resources in accordance with the predetermined rules.

The representational models may comprise two or more of:
- a panoramic representation;
- a two-dimensional cutout representation;
- a two-dimensional cutout plus depth representation; and
- a three-dimensional volumetric representation.

Another example embodiment provides a computer-readable instructions which, when executed by at least one processor, cause the at least one processor to perform the method of any preceding method definition.

Another example embodiment provides a non-transitory computer-readable medium having stored thereon computer-readable code, which, when executed by at least one processor, causes the at least one processor to perform a method, comprising: receiving video data representing a three-dimensional scene; receiving from a user device data representing a field of view within the scene; identifying, based on the field of view, a plurality of parts of the scene; transforming the parts to a selected one of a plurality of representational models, the representational models having different respective properties, the selection being based on one or more predetermined rules; and encoding the transformed parts into a combined video set or stream for transmission to the user device.

Another embodiment provides an apparatus, the apparatus comprising at least one processor and at least one memory including computer program code, the at least one memory and computer program code configured to, with the at least one processor, cause the apparatus to at least perform: receiving video data representing a three-dimensional scene; to receive from a user device data representing a field of view within the scene; to identify, based on the field of view, a plurality of parts of the scene; to transform the parts to a selected one of a plurality of representational models, the representational models having different respective properties, the selection being based on one or more predetermined rules; and encoding the transformed parts into a combined video set or stream for transmission to the user device.

A "means" as mentioned above may comprise hardware, software or a combination thereof.

### Brief Description of the Drawings

Embodiments will now be described, by way of non-limiting example, with reference to the drawings, in which:
FIG. 1 is a schematic diagram of a virtual reality processing apparatus in relation to one or more user devices and a communications network in accordance with various examples described herein;
FIG. 2 is a schematic diagram of a video processing system that may form part of the

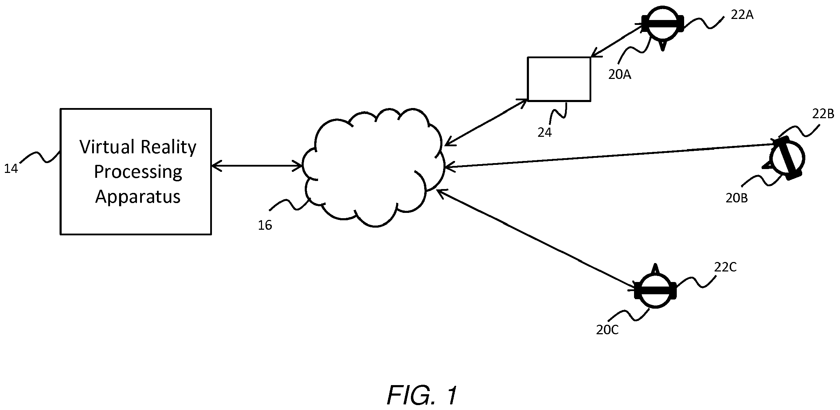

FIG. 1 virtual reality processing apparatus in accordance with various examples described herein;

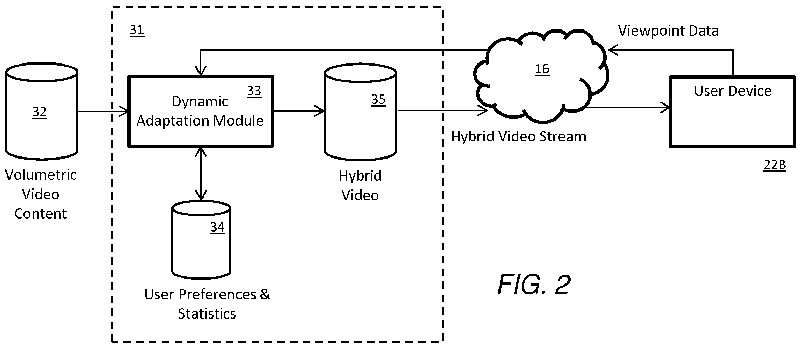

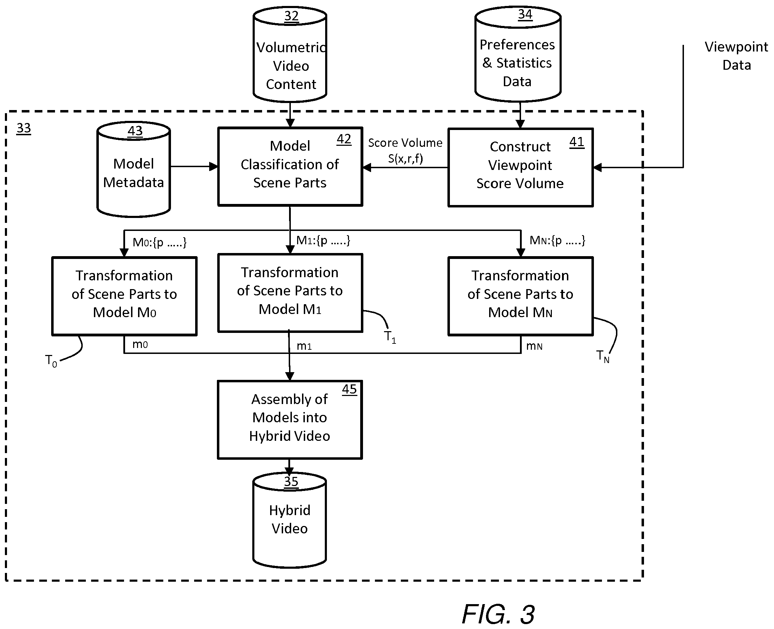

FIG. 3 is block diagram showing functional modules of the FIG. 2 video processing system in accordance with various examples described herein;

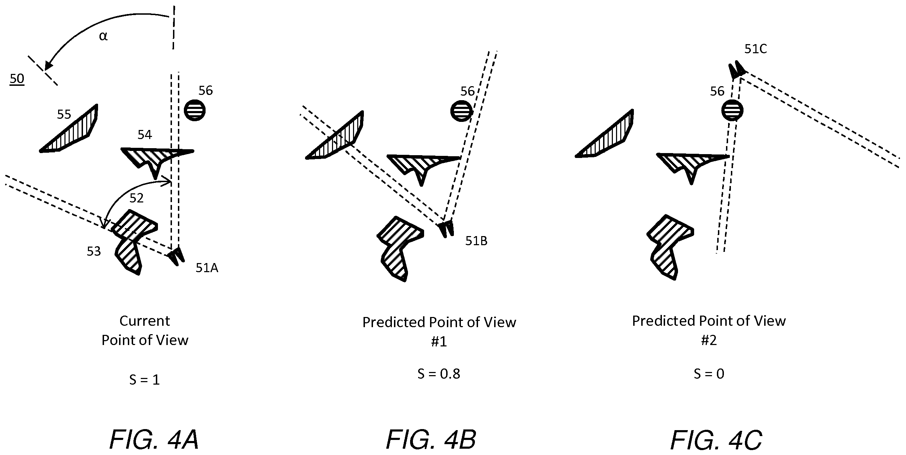

FIGS. 4A - 4C show top plan views of a volumetric video scene comprising objects and respective different viewpoints, useful for understanding various examples described herein;

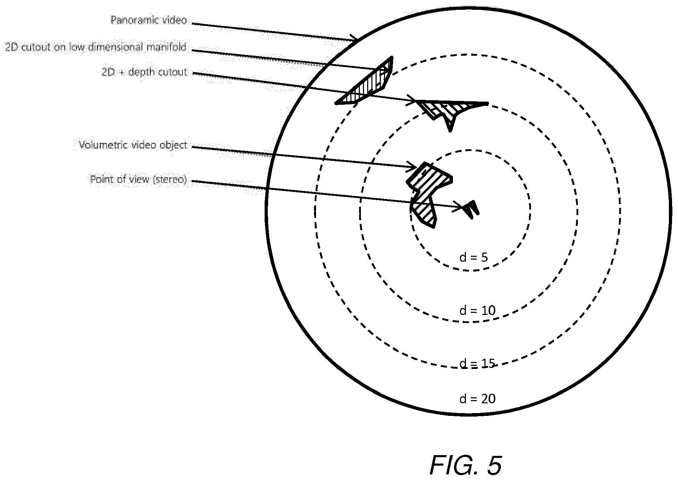

FIG. 5 is a top plan view of a volumetric video scene comprising objects and an indication of how different transformations may be applied based on depth from a viewpoint in accordance with various examples described herein;

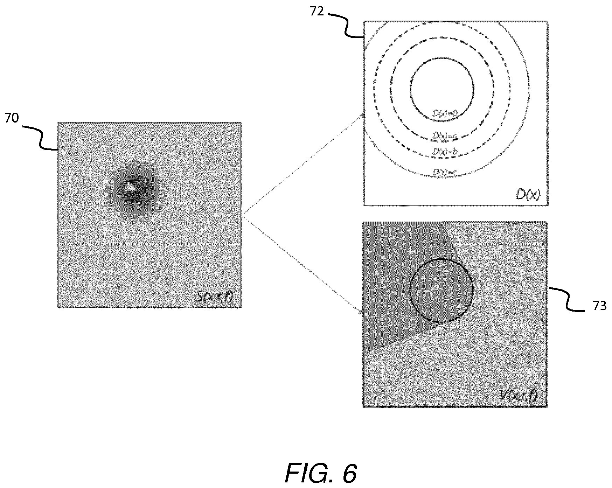

FIG. 6 is a schematic diagram showing graphically how part of a volumetric video scene may produce a distance map and a visibility map, for use in accordance with various examples described herein;

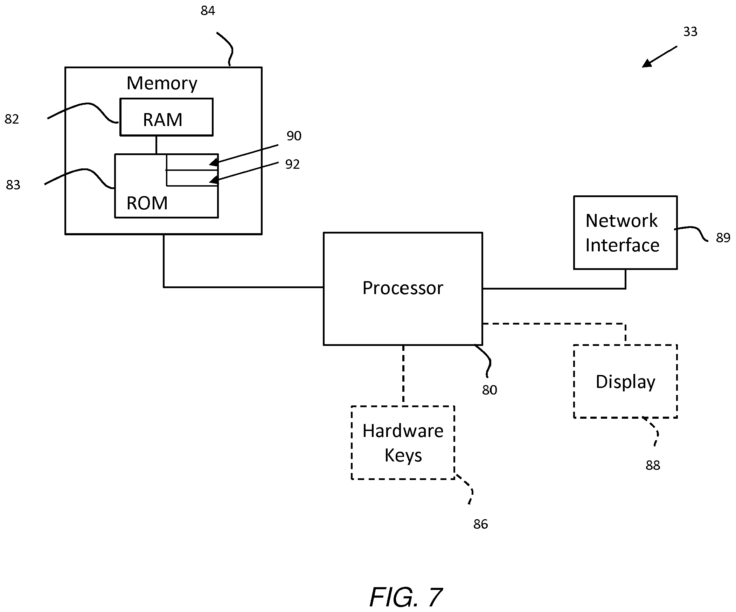

FIG. 7 is a schematic diagram of components of the FIG. 2 video processing system in accordance with various examples described herein; and

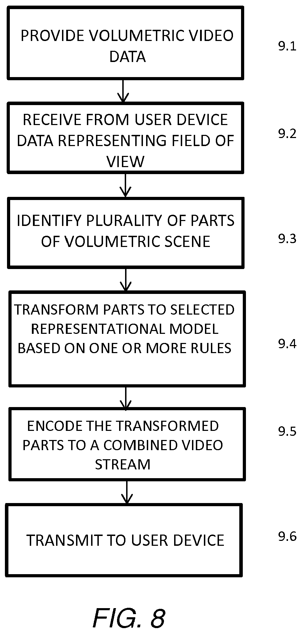

FIG. 8 is a flow diagram showing processing operations of a method, in accordance with various examples described herein.

### Detailed Description of Example Embodiments

In the description and drawings, like reference numerals refer to like elements throughout.

Embodiments herein particularly relate to the processing of data representing images or video in three-dimensions for display to a user device (hereafter referred to as "video content"). The user device may comprise any form of user device through which the video content can be displayed to a user. The video content may represent one or more objects or scenes which can be real world or computer-generated objects or scenes. The video content may represent real world content captured using one or more cameras, for example using a multi-camera module such as Nokia's OZO camera, a laser scanner and/or a combination of video and dedicated depth sensors. Other capturing systems are known. The video content may also be generated using three-dimensional models, e.g. using computer-generated imagery (CGI) or real-life captured imagery. A combination of captured and CGI video content is possible. The video content may be panoramic. The video content may or may not be accompanied by audio data.

Embodiments are applicable to any form of immersive media methods or systems. Such methods and systems are applicable to related technologies, including, but not limited to, Virtual Reality (VR), Augmented Reality (AR) and mixed reality (MR).

Embodiments may relate to processing involving transforming and encoding of video content. Transforming may mean converting data from one format to another. Encoding may comprise aggregation, compression and/or combining video content representing multiple parts of a scene or portion of a scene to a combined data set or stream for transport over a communications network. Embodiments may also relate to decoding and rendering of received video content. Decoding may include decompression.

An example application of three-dimensional video content is in virtual reality (VR). Virtual reality is a rapidly developing area of technology in which the video content, generally but not always is accompanied by audio, is provided to a user device such as a user headset. As is known, the user device may be provided with a live or stored feed from a content source, the feed representing at least part of a virtual space for immersive output through the user device. The position of the user device can enhance the immersive experience. A change of position, i.e. movement, can also enhance the immersive experience. Currently, most virtual reality user devices use so-called three degrees of freedom (3DoF), which means that the head movement in the yaw, pitch and roll axes are measured and determine what the user sees. An enhancement is a six degrees-of-freedom (6DoF) virtual reality system, where the user may freely move in Euclidean space as well as rotate their head in the yaw, pitch and roll axes. Six degrees-of-freedom virtual reality systems enable the provision and consumption of volumetric video content. Volumetric video content comprises data representing spaces and/or objects in three-dimensions from all angles, enabling the user to move around the space and/or objects to view them from any angle. Such video content may be defined by data describing the geometry (e.g. shape, size, position in a three-dimensional space) and attributes such as colour, opacity and reflectance. The video content may also define temporal changes in the geometry and attributes at given time instances, similar to frames in two-dimensional video. The video content may be represented by voxels, meshes, point clouds, for example.

Embodiments herein enable improved encoding and/or transport of volumetric content, notwithstanding that a large amount of data may be needed to represent a myriad of possible viewpoints, for example due to user movement and/or binocular vision. Embodiments may relate to encoding and/or transport of volumetric content which takes into account all possible viewpoints based on movement.

For example, embodiments may comprise a means for receiving video content representing a volumetric scene and a means for receiving from a user device data representing a field of view within the volumetric scene.

A "user device" can be any form of device for receiving and/or decoding the video data for provision to a display device, which may or may not form part of the user device. For example, the user device may comprise a headset comprising one or more display screens, but is by no means limited to such.

A "field of view" means a sub-portion of the volumetric scene represented by the video content that is visible to a user associated with the user device. This may be determined using position data from the user device itself, or some other associated system that can determine the position of the user device relative to the volumetric scene. In this specification, viewpoint data is data representing, or from which can be derived, a field of view associated with the user device.

Embodiments may be configured to identifying, based on the field of view, a plurality of parts of the volumetric scene. A "part" is a sub-portion of the volumetric scene and may comprise sub-portions inside and/or outside the field of view. This may comprise segmenting the volumetric scene visible within the field of view using any known method. For example, object detection and/or segmentation may be used. Segmenting may be based on identifying sub-portions having similar properties, e.g. depth and/or colour and/or texture. Identifying the plurality of parts may also take into account predicted future fields of view, as will be explained. Predicted future fields of view may be determined based on user-specific (or group-specific) statistics data which may represent historical positions and/or movements. For example, identifying the plurality of parts may comprise dividing or splitting the current field of view and/or one or more future fields-of-view into a plurality of objects.

Where splitting based on depth, this may be based on the relative depth of objects within the scene, i.e. relative to the viewpoint associated with the user device. Objects may comprise distinct objects and/or background pixels. This viewpoint (or point of view) may also be termed the origin of the field of view. The depth of objects may be determined using depth information that is provided as part of the video content for the whole scene, e.g. provided in the form of a depth map or other suitable data representation.

Embodiments may also be configured to transform parts to a selected one of a plurality of representational models, the representational models having different respective properties. Transforming may mean converting the video content for the respective parts from their provided format to another format associated with the selected representational model. The transformation can be performed on all of the parts, or only a subset of them as will be explained in a next paragraph. The transformation may be performed on the selected parts separately on in an aggregated manner.

In this respect, embodiments will focus on the following representational models, namely a panoramic video representation, a two-dimensional cutout representation, a two-dimensional plus depth cutout representation and a three-dimensional volumetric representation. Each has its own respective properties as follows, although it will be appreciated that there may be other representational models and properties provided. Each of the above four examples will be briefly introduced below.
(I) Panoramic video representations may comprise a two-dimensional video, mapped onto a generally spherical surface, assumed to be viewed from the centre of an associated sphere. Such a representation can support rotation with the user device viewpoint at the centre of the sphere, but spatial motion cannot be efficiently supported without introducing distortion, except by making the sphere very large or by making the amount of motion compared with the sphere very small.
(II) Two-dimensional cutout representations may comprise two-dimensional video parts that are cut out from their background and mapped onto a low dimensional manifold. The manifold can be planar or a shape that more closely resembles the object in order to facilitate robustness to camera motion. Such a representation can support rotation from a centre point, similar to the above case, and spatial motion may be supported to a limited degree provided the cut out is sufficiently far from the viewpoint and/or if the manifold closely resembles the actual geometry of the object. Such a representation may also provide a motion parallax effect that enhances the depth effect when moving.
(III) Two-dimensional plus depth cutout representations may comprise two-dimensional video parts that are cut out from their background, with a projection manifold that substantially matches the actual geometry of the object which it is meant to represent, at least when viewed from one viewing angle. Spatial motion is therefore supported in a limited manner, but is less restricted than in the previous example. One cannot view occluded parts of the object. Such a representation may also provide a motion parallax effect that enhances the depth effect when moving.
(IV) Three-dimensional volumetric representations, which may comprise a mesh or point cloud, may comprise all data needed for an object to be rendered from any viewpoint, even initially occluded portions. Accordingly, arbitrary rotation and spatial motion is supported. Advances in computational resources and in three-dimensional acquisition devices enable reconstruction of highly-detailed volumetric representations. Infrared, laser, time-of-flight and structured light technologies are examples of how such content may be constructed. The representation of volumetric content may depend on how the data is to be used. For example, dense voxel arrays may be used to represent volumetric medical images. In three-dimensional graphics, polygon meshes are extensively used. Point clouds, on the other hand, are well suited to applications such as capturing real-world scenes where the topology of the scene is not necessarily a two-dimensional surface or manifold. Another method is to code three-dimensional data to a set of texture and depth maps. Closely related to this is the use of elevation and multi-level surface maps. For the avoidance of doubt, embodiments herein are applicable to any of the above technologies.

It may be noted that in other embodiments more than these 4 types may be present. In another embodiment a fifth representation model can be also used, being e.g. a coloured point cloud.

The properties pertaining to these representation models may be performance properties. For example, it will be appreciated that, generally speaking, the reproduction quality of realistic volumetric content increases from representation (I) to (IV); however, so do requirements for the amount of encoding and decoding computational resources, and transport bandwidth. The performance properties may be provided in metadata which is associated with each representational model (I) to (IV) in order to facilitate the selection based on one or more predetermined rules.

Accordingly, embodiments herein involve transformation selection based on one or more predetermined rules, or "selection rules". The one or more rules may be relatively simple, e.g. based on depth of the respective part from the current viewpoint, or may be complex, e.g. to achieve a particular reproduction quality within certain processing and/or bandwidth bounds. This selection may be adaptively applied over time, for example in real-time or near real-time, to provide a required computational and bandwidth efficiency whilst maintaining an acceptable level of user experience. The one or more predetermined rules may adaptively update over time.

Embodiments may also provide encoding each of the transformed parts into a combined video set or stream for transmission to the user device. This video set or stream may be termed a hybrid video set or stream in that two or more different representational models may be present in the encoded video set or stream, which may enable a personalised version of the volumetric data to be provided to the user device, based on user-specific requirements.

The selection and encoding may be performed adaptively over time, for example based on updated positional data received from the user device. Alternatively or additionally, this may be based on other data such as preference or statistics data from, or associated with, the user device, or a user of the user device. For example, future movement of the user device may be indicated, or may be determined using, statistics data indicative of historical movement of the user device over one or more prior time periods. For example, preference data may indicate that the user of the user device wishes to move rapidly and freely, as much as possible. For example, preference data may indicate that the user prefers low latency over accurate volumetric representations, or vice versa.

Additionally, or alternatively, the selection rules may be based on characteristics of the human visual system (HVS). Such characteristics may be general to a population, part of a population, or specific to a particular user.

For example, characteristics may be specified as part of preference data associated with the user device or a user of the user device. The characteristics may indicate depth perception capabilities of the user, for example. A user who is highly sensitive to differences in depth may have different preference data to someone who is less sensitive, and the rules may therefore determine how to transform the volumetric video parts based on this preference data.

In some example embodiments, characteristics of the human visual system (HVS) may be associated with specific users. For example, a profile associated with a specific user may be generated based on a calibration process which measures or indicates depth sensitivity of the user. The profile may be representative of the specific user's human visual system (HVS) characteristics and used in association with the selection rules herein. Other users may have respective profiles with their own calibrated characteristics.

Embodiments focus on the encoding of volumetric video data for one user device or one user associated with a user device. However, it should be appreciated that methods and systems described herein are also applicable to encoding volumetric video data for multiple user devices and/or users.

FIG. 1 is a schematic view of a virtual reality processing apparatus 14 in relation to a network 16, which may be an Internet Protocol (IP) network such as the Internet, or any other form of data network, and a plurality of remote users 20A - 20C having respective user headsets 22A - 22C for consuming the content when rendered. The virtual reality processing apparatus 14 may stream the content over multiple transmission channels via the network 16. The remote users 20A - 20C may be co-located or located in separate real-world locations, possibly in different countries. What each remote user 20A - 20C sees through the video screens and/or headphones of their respective headsets 22A - 22C is part of a real or virtual space or scene.

The virtual reality processing apparatus 14 may be implemented on one or several distributed servers. The virtual reality processing apparatus 14 is configured to encode and serve the video content to one or more user devices. This serving, or transmission, may be by streaming transmission or any other suitable transmission format. The virtual reality processing apparatus 14 may be configured to receive and store the video content from a capturing source or another source of the video content.

In the context of this specification, a virtual space or scene is any captured real-world space, or computer-generated version of a space, for example a volumetric real world space captured using any suitable camera system or multiple camera systems, in which one or more users 20A - 20C can be immersed. In some example embodiments, the virtual space may be entirely computer-generated, e.g. CGI. The headsets 22A - 22C may be of any suitable type. Headsets 22A - 22C are described by way of example only, and any form of user device for displaying video content can be used.

The headsets 22A - 22C may receive the video content directly from the virtual reality processing apparatus 14, or, in some embodiments, from a separate media player 24 to which the headset is connected. For example, the media player 24 may include a games console, or a personal computer (PC) configured to receive visual and/or audio data from the virtual reality processing apparatus, via the network 16, and communicate this to the headset 22A shown in FIG. 1. Alternatively, the media player 24 may form part of the headset 22A. In some examples, the media player 24 may comprise a mobile phone, smartphone or tablet computer configured to play content through its display.

The headsets 22A - 22C may be configured to determine the spatial position of the respective users 20A - 20C and/or orientation of the respective user's head. In some embodiments, therefore, the headsets 22A - 22C may track movement using six degrees-of-freedom. Over successive time frames, a measure of movement may therefore be calculated and stored. For example, the headsets 22A - 22C may incorporate motion tracking sensors which may include one or more of gyroscopes, accelerometers and structured light systems. These sensors generate viewpoint data from which a current position (or "viewpoint") and visual field of view (FOV) can be determined and updated as the one or more user headsets 22A - 22C change position and/or orientation. The headsets 22A - 22C may comprise gaze tracking means used to determine a direction of the user's gaze, which can also be used to determine an object of interest the user is looking at. The headsets 22A - 22C may comprise, or be associated with, other limb tracking means to determine the position or orientation of a limb of the user.

Other systems for determining positon and therefore the viewpoint data may involve one or more external cameras tracking the user or the respective headsets 22A - 22C.

The headsets 22A - 22C may typically comprise two digital screens for displaying stereoscopic video content in front of respective eyes of the user, and also two speakers for delivering audio, if provided. The headsets 22A - 22C may comprise one or more cameras. Images from the one or more cameras may be presented to the user through the screens of the headsets 22A - 22C, such that the real world environment is displayed to the user in a "see-through mode", or an augmented reality (AR) or mixed reality (MR) mode.

The example embodiments herein, which primarily relate to the processing and delivery of video content, are not limited to a particular type of virtual reality headset 22A - 22C. Any form of user display device may be used.

The headsets 22A - 22C, or the media player 24, may be configured to display a portion of the video content based on the spatial position and/or the orientation of the respective headset. A detected change in spatial position and/or orientation, i.e. a form of movement, may result in a corresponding change in the visual and/or audio data to reflect a position or orientation transformation of the user 20A - 20C with reference to the space into which the visual and/or audio data is projected. This allows the video content to be consumed with the user 20A - 20C experiencing a three-dimensional (3D) virtual reality environment.

In the context of volumetric virtual reality spaces, this means that the user's position can be detected relative to content provided within the video content, e.g. so that the user can move freely within a given virtual reality space, around individual objects or groups of objects, and can view the objects from different angles depending on the movement (e.g. rotation and location) of their head in the real world. In some examples, the user may also view and explore a plurality of different virtual reality spaces and move from one virtual reality space to another one.

The angular extent of the environment observable through the respective headsets 22A - 22C is called the visual field of view (FOV). The field of view observed or heard by a user depends on the inter-pupillary distance and on the distance between the lenses of the headset 22A - 22C and the user's eyes, but the field of view can be considered to be approximately the same for all users of a given display device when the headset is being worn by the user.

Referring to FIG. 2, a video processing system 31 is shown in accordance with an example embodiment. The video processing system 31 may be provided as part of the virtual reality processing apparatus 14, or as separate entity, distinct from the virtual reality processing apparatus 14. For example, the video processing system 31 may be provided on or as a separate server connected to the communication network 16.

The video processing system 31 may comprise, or has access to, a source of volumetric video content 32, i.e. data in any suitable form representing three-dimensional video, and may communicate with a user device, for example one or more of the headsets 22A - 22C shown in FIG. 1 via the communication network 16.

The video processing system 31 may comprise a dynamic adaptation module 33 and a storage for a set of user preferences and/or statistics 34 data, which may be stored on memory or may be accessed from external memory. The dynamic adaptation module 33 is configured to produce a set of hybrid video data 35 which may be stored on local or external memory. The hybrid video data 35 may subsequently, or alternatively, directly (without intermediate storage; this embodiment not being shown on Fig.2) be streamed to the user device 22B as shown, for example responsive to a current and/or predicted field of view which may be provided in the form of (or derived from) the viewpoint data from the user device 22B.

The dynamic adaptation module 33 is configured as follows, and may be provided in any suitable form, for example as hardware, software or a combination thereof.

In overview, the dynamic adaptation module 33 is configured to produce a personalised video stream for a user or a multiple users.

As mentioned above, this may take into account one or more transformation rules which determine which one of a plurality of representational models to transform respective parts of the volumetric video 32 into. Examples will be described later on.

FIG. 3 shows functional modules of the dynamic adaptation module 33 according to some embodiments, in relation to other modules of the FIG. 2 video processing system 31. These may be provided in any suitable form, for example as hardware, software or a combination thereof. In some embodiments, all functions can be performed by a single processor (or more than one processor), in conjunction with software code stored in at least one memory. Other embodiments may implement distributed processing on different processors.

A first functional module comprises a first "construct viewpoint score volume" module 41. This first module 41 is configured to receive the viewpoint data and receive (or has access to) the user preferences and/or statistics data 34. The first module41 is configured to use said user preferences and/or statistics data 34 to identify volumetric portions within the virtual video content 32 that are within the current field of view and, in some embodiments, have a probability of being within a future field of view, e.g. within a certain time period T. The value of the time period T can be user-configured and stored within the user preference and/or statistics data 34.

For example, the first module 41 may generate a score volume function S(x,r,f) representing the probability that a viewpoint at location x with rotation r and field-of-view f will be requested by the user device 22B within the time period T. In a simple case, S will only be non-zero for the current viewpoint, meaning that future viewpoints are not considered. In other cases, S may be non-zero for other viewpoints based on statistical data in the user preference and/or statistics data 34 and/or an estimated end-to-end system latency. The statistical data may represent, for example, historical positions or movements exhibited by the user or group of users, potentially in relation to the current or similar viewpoints and/or particular objects, or indeed any data that may assist in determining a probability that a new viewpoint will be requested within the time period T.

FIG. 4A for example shows in top plan view a two-dimensional section of a volumetric space 50 comprising four objects 53 - 56. A current viewpoint is represented by a viewpoint position 51A, a rotation (e.g. an angle α from a reference axis or plane) and a field of view 52 (shown in binocular form). The score volume function S for the current viewpoint may therefore be 1 or close to 1. FIG. 4B for example shows another viewpoint represented by a different viewpoint position 51B and different rotation. Based on the statistical data, it may have a score volume function S of less than 1, i.e. 0.8, indicating that it is reasonably likely that this viewpoint will be requested in the time period T. For example, the statistics data 34 may indicate that movement towards other objects or movement in the forwards and clockwise directions has occurred previously on a significant number of occasions. This may be based at least partly on the current viewpoint position 51A or even the type of object(s) in the FIG. 4B and/or when they appear. FIG. 4C for example shows another viewpoint represented by a different viewpoint position 51C and different rotation. Based on the statistical data, it may have a score volume function S of zero, or close to zero, indicating that it is highly unlikely that this viewpoint will be requested in the time period T. For example, the statistical data may indicate that the user does not historically move quickly enough for this viewpoint to occur within the time period T, hence S being zero in this case. A person skilled in the art is able to generate e.g. appropriate software instructions or hardware circuitry to obtain a score function in line with above mentioned principles.

This process of determining values of S may be performed for all or a limited number of the possible viewpoints possible within the video content. Having determined the values of S, further operations may be performed.

Returning back to FIG. 3, a second functional module comprises a second "model classification of scene parts" module 42. This second module 42 processes the volumetric video as follows.

In overview, the second module 42 identifies or otherwise splits the volumetric video into parts and provides the classified objects or parts, denoted Mo:(p) to M_{N} :(p) in Fig. 3, to respective transformation modules denoted To to T_{N}. These transformation modules are configured to apply a selected transformation to the parts they receive based on one or more selection rules, to be mentioned later on. The term "transformation" means converting video data of one format into another. More specifically, the video content for a given part is converted from its provided data format into one of a plurality of different representational models. By way of example, we refer to the models (I) - (IV) referred to above and their associated characteristics.

In an example embodiment, the second module 42 receives the values of S, from the first module 41 for the different possible viewpoints, and also model metadata 43. The splitting and/or transforming may therefore be based on the values of S and the model metadata 43.

In example embodiments herein, the above-mentioned transformation modules To to T_{N} are provided for transforming video content parts into, respectively, (I) a panoramic video representational model, (II) a two-dimensional cutout representational model, (III) a two-dimensional plus depth cutout representational model and (IV) a three-dimensional volumetric representational model. In this particular embodiment N=4. However, as will of course be appreciated, in other examples, fewer than four transformation modules may be utilised (e.g. a subset of those listed above). Likewise, in other embodiments, more than four transformation modules may be used. It will also be appreciated that the transformation modules are not limited to those described above. For instance, other examples of transformation modules that may be utilised may include a coloured point cloud representational model. The skilled person will also recognize that, in some examples, all modules may be realized in one larger functional module, and that, in other examples the respective modules may be implemented as aggregates of sub-modules.

For each model (I) - (IV), the metadata 43 is provided at, or for input to, the second module 42. Each set of metadata 43 indicates characteristics with regard to a number of performance measures.

For example, the performance measures may be: (i) quality of reconstruction, (ii) computational requirements, and (iii) bandwidth requirements. Other performance measures may be provided.

For example, table 1 below indicates, in each row, an example set of metadata for the respective representational models (I) - (IV). A low number indicates poor performance whereas a high number indicates good performance.

**Table 1 - Example Metadata for Representational Models**

| | Quality of Reconstruction | Computational Requirements | Bandwidth Requirements |
|---|---|---|---|
| (I) Panoramic | 1 | 10 | 10 |
| (II) 2D Cutout | 4 | 7 | 7 |
| (III) 2D+Depth Cutout | 6 | 4 | 4 |
| (IV) 3D Volumetric | 10 | 1 | 1 |

The second module 42 is configured to select which of the models (I) to (IV) to use, or more specifically, which of transformation modules To to T_{N} to apply to different parts of the volumetric video to.

The selection may be based on the one or more rules. In a simple embodiment in which a simple rule is used, video processing system 33 may be caused to transform a number of parts in order to maximise reconstruction quality whilst making efficient use of computational and bandwidth requirements. For example, this may be based on depth to the requested viewpoint, and possibly that of one or more future viewpoints.

For example, for the current viewpoint shown in FIG. 4A, the corresponding volumetric video may be split into parts corresponding to the covered first to third objects 53 - 55 and a part corresponding to the distant background. Each of the first to third objects 53 - 55 may be transformed based on their respective depths to the viewpoint position 51A. For example, the nearest object 53 may be transformed using transformation module 44A to a three-dimensional volumetric model (IV); the next nearest object 54 may be transformed using transformation module 44B to a two-dimensional plus depth cutout model (III), and the next nearest object 55 may be transformed using the transformation module 44C to a two-dimensional cutout model (II). The distant background may be transformed using another transformation module (not shown) to a panoramic model (I). FIG. 5 shows in top-plan view such an assignment for the first to third objects 53 - 55.

More complex rules for model selection may be provided, for example based on predicted future viewpoints indicated by S. For example, the above transformation operations may be performed on one or more parts of the FIG. 4B viewpoint, such that the fourth object 56 is also transformed, also based on distance. For example, whether or not a predicted future viewpoint will be used may be based on the value of S being above a threshold.

Other examples of rules for model selection may take into account statistics and system settings, e.g. as defined in the user preferences and statistics data 34. For example, the user preferences and statistics data 34 may determine system optimisation settings, such as optimise bandwidth, optimise encoding performance, optimise decoding performance, optimise quality of reconstruction, optimise latency, or a combination thereof. For example, the user preferences and statistics data 34 may specify particular ranges or upper or lower limits for transformations. For example, the user preferences and statistics data 34may determine that the best possible quality of reconstruction should be provided up to a bandwidth limit of X and/or an encoding performance of Y etc.

In general, parts that are not visible will not be transformed, unless there is some likelihood that they will be requested in the time frame T. These will also not be transmitted to a user. This also means that not all scene parts are selected as pertaining to one of the used models.

These rules can be pre-programmed, thus taking into account potentially parametrisable input data as described in previous paragraphs. These rules can be stored within a memory of the video processing system, or may be learned by the video processing system itself during operation, e.g. via machine learning , in which embodiments the system identifies itself in an automomous way some rules pertaining to a desired performance to obtain. This desired performance can be provided or selected by an operator of the video processing system and may thus to the earlier described performance measures, e.g. bandwidth optimization or computational resource optimization , latency, etc.

Note that the above-referred to "parts" can be parts at different levels of abstraction. At the lowest level, parts can be the primitives of the volumetric representation. For a triangle mesh, for example, one can consider each of the triangles as a part and perform the selection and transformation for each of these triangles. Moving higher up the semantic scale, a part can also represent an explicit split of the volumetric space in a number of subspaces, and one can assign each subspace to a part. In the most simple case for instance, one might split the content volume in each dimension in a uniform manner. Splitting X, Y and Z dimensions into 10 sections each, for example, will create 10*10*10=1000 subspaces and an equivalent number of parts. A more relevant way of splitting the space may also consider the content itself within the space to facilitate the split (e.g. using octree-like segmentation). When moving even higher up the semantic scale, one can make use of prior knowledge of the content itself that was captured or provided during the video content construction process. Volumetric video content typically consists of predefined objects and environments; these objects and environments may already have a notion of distinct objects in their very definition, and one can thus use these notions to link them to parts. A bottle on a table might thus be considered a part, as would the head of a person or a table. A hybrid solution where the highest semantic level is used and further split using lower level approaches when the part is too large is also possible.

Calculating the distance and visibility using the given score volume may still require computation. For example, referring to FIG. 6, it may be useful to first pre-compute for a particular viewpoint 70 two additional maps from the score volume S(x,r,f): a distance map D(x) 72 and a visibility map V(x,r,f) 73. One may first threshold the score volume S(x,r,f) to a certain threshold *δ*. The threshold *δ* depends on the required level of quality under given conditions. If top quality is required by the one or more selection rules, the threshold *δ* may be close to zero. If the one or more selection rules are aimed at best effort, one can adapt the threshold according to the conditions on which one wants to optimize (bandwidth, computation, etc.). Once thresholded, the distance map 72 can be provided by assigning D(x) to zero for all non-zero S(x,r,f) and propagating this boundary outwards. For the visibility map 73, one needs to take the rotation and field of view in to account. As such, one will carve viewing pyramids into the visibility map 73 along the thresholded score volume.

It will be appreciated that one can go beyond simple heuristics and assess the quality of reconstruction for all available models (I) - (IV). This then effectively becomes an optimization problem where one may need to optimize towards a certain quality and estimated bandwidth and/or computational resources. One can use existing optimization frameworks for this purpose however.

Referring back to FIG. 3, once the selection has been made regarding the model transformation to use for each of the parts, transformation is performed using the appropriate transformation modules 44A - 44C to provide the respective models. This may be highly model representation dependent. For example, in order to create a panoramic video model (I) for instance, one will effectively project the content for the given part onto a spherical geometry and use this projection as a texture. For two-dimensional plus depth cutout models, one will project the content for the given part onto a plane and keep the Z-buffer, if needed. If the volumetric content data for the given part is mesh based, one does not need to do a transform for the mesh sub-model. If not, however, re-meshing will be needed.

A further functional module comprises an "assembly of models into hybrid video" module 45, which encodes the two or more models into one data set or stream for provision to the hybrid video memory 35 or for direct streaming to the user device 22B and/or other user devices, using the deployment scenario shown in FIG. 2.

A user-specific video stream is therefore created by feeding back the current viewpoint of the user in order to determine the appropriate sub-representation format for each of a plurality of objects or parts. Latency may be taken into account to make sure that the user, when undergoing predictable motion, still gets the required quality. Note that the computational requirements can be tuned to the available computational and/or bandwidth capacity. If enough capacity is available, one can create a new representation on-the-fly per user. One can however also pre-compute different sub-representations per object, and make the per-user adaptation a much less stringent selection process rather than a synthesis process.

FIG. 7 is a schematic diagram of components of the dynamic adaptation module 33.

The dynamic adaptation module 33 may have a processor 80, a memory 84 closely coupled to the processor and comprised of a RAM 82 and ROM 83, and, optionally, hardware keys 86 and a display 88. The dynamic adaptation module 33 may comprise one or more network interfaces 89 for connection to a network, e.g. a modem which may be wired or wireless.

The processor 80 is connected to each of the other components in order to control operation thereof.

The memory 84 may comprise a non-volatile memory, a hard disk drive (HDD) or a solid state drive (SSD). The ROM 83 of the memory 84 stores, amongst other things, an operating system 90 and may store software applications 92. The RAM 82 of the memory 84 may be used by the processor 80 for the temporary storage of data. The operating system 90 may contain code which, when executed by the processor ware components of the dynamic adaptation module 33.

The processor 80 may take any suitable form. For instance, it may be a microcontroller, plural microcontrollers, a processor, or plural processors and it may comprise processor circuitry.

The dynamic adaptation module 33 may be a standalone computer, a server, a console, or a network thereof.

In some embodiments, the dynamic adaptation module 33 may also be associated with external software applications. These may be applications stored on a remote server device and may run partly or exclusively on the remote server device. These applications may be termed cloud-hosted applications. The dynamic adaptation module 33 may be in communication with the remote server device in order to utilize the software application stored there.

FIG. 8 is a flow diagram showing processing operations that may be performed by the dynamic adaptation module 33. For example, the processing operations in FIG. 8 may be performed by hardware, software or a combination thereof at the dynamic adaptation module 33. The processing operations in FIG. 8 may be embodied in code of the software application 92. The order of operations is not necessarily indicative of processing order.

An operation 9.1 comprises receiving volumetric video data, i.e. video content, representing a three-dimensional or volumetric scene.

Another operation 9.2 may comprise receiving from a user device data representing a field of view, for example viewpoint data.

Another operation 9.3 may comprise identifying a plurality of parts of the volumetric scene. This may comprise parts within a current field of view and may also comprise parts outside of the current field of view, for example within one or more predicted future fields of view. The parts may be objects.

Another operation 9.4 may comprise transforming some or all of the part to a selected representational model based on one or more rules.

Another operation 9.5 may comprise encoding the transformed parts to a combined video set or stream.

Another operation 9.6 may comprise transmitting the combined video set or stream to the user device or a device associated with the user device.

Further operations may form part of the FIG. 8 processing operations.

For the avoidance of doubt, references to virtual reality (VR) are also intended to cover related technologies such as augmented reality (AR) and mixed reality (MR), but are not limited to such.

References to "means" may comprise hardware, software, firmware or a combination thereof. For example, the means may be a computer, computer controller or processor, or microcontroller, which may operate in association with software applications or code.

References to "viewing position" may be extended to a predicted viewing position associated with the client device, i.e. a future viewing position.

It will be appreciated that the above described embodiments are purely illustrative and are not limiting on the scope of the invention. Other variations and modifications will be apparent to persons skilled in the art upon reading the present application.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. Apparatus, comprising means for performing:
receiving video data representing a three-dimensional scene;
receiving from a user device data representing a field of view within the scene;
identifying, based on the field of view, a plurality of parts of the scene;
transforming the parts to a selected one of a plurality of representational models, the representational models having different respective properties, the selection being based on one or more predetermined rules; and
encoding the transformed parts into a combined video set or stream for transmission to the user device.

2. The apparatus of claim 1, wherein the means are further configured to perform predicting one or more future fields of view within the scene and wherein the identifying means is arranged to identify a plurality of parts within the field of view and within the one or more future fields of view.

3. The apparatus of claim 2, wherein the means are further configured to receive data indicative of historical motion of the user device and to determine therefrom the predicted one or more future fields of view.

4. The apparatus of claim 3, wherein the predetermined rules are dependent on parameters associated with the user device and/or a user of the user device.

5. The apparatus of claim 4, wherein the predetermined rules are dependent on parameters of the human visual system of a user of the user device.

6. The apparatus of claim 5, wherein the predetermined rules are dependent on depth perception of a user of the user device.

7. The apparatus of any preceding claim, wherein the means are further configured to determine that the transformation the parts is based on the respective part's depth from a position or future position of the user device in accordance with the predetermined rules.

8. The apparatus of any preceding claim, wherein the predetermined rules are dependent on performance parameters associated with the user device or a communications network associated with the user device.

9. The apparatus of claim 8, wherein the means are further configured to determine that the transformation of the parts is selected based on a bandwidth needed to transmit the combined video set or stream to the client device in accordance with the predetermined rules.

10. The apparatus of claim 9, wherein the means are further configured to receive from the user device an indication of a currently-available bandwidth for receiving the combined video set or stream, and further configured to determine that the selected transformation of the parts is such that the plurality of parts when encoded to the combined video set or stream are substantially within the currently-available bandwidth in accordance with the predetermined rules.

11. The apparatus of any of claims 8 to 10, wherein the means are further configured to determine that the transformation of the parts is selected based on the computational resources needed to decode the combined video set or stream at the user device in accordance with the predetermined rules.

12. The apparatus of claim 11, wherein the means are further configured to receive from the user device an indication of currently-available computational resources of the user device, and wherein the means are further configured to determine that the selected transformation of the parts is such that the plurality of parts when encoded to the combined video set or stream are decodable using said currently-available computational resources in accordance with the predetermined rules.

13. The apparatus of any preceding claim, wherein the representational models comprise two or more of:
- a panoramic representation;
- a two-dimensional cutout representation;
- a two-dimensional cutout plus depth representation; and
- a three-dimensional volumetric representation.

14. A method comprising:
receiving video data representing a three-dimensional scene;
receiving from a user device data representing a field of view within the scene;
identifying, based on the field of view, a plurality of parts of the scene;
transforming the parts to a selected one of a plurality of representational models, the representational models having different respective properties, the selection being based on one or more predetermined rules; and
encoding the transformed parts into a combined video set or stream for transmission to the user device.

15. Computer-readable instructions which, when executed by at least one processor, cause the at least one processor to perform the method of claim 14.
